# EUROPÄISCHE PATENTSCHRIFT

(11) **EP 1 292 460 B1**
(45) Veröffentlichungstag und Bekanntmachung des Hinweises auf die Patenterteilung: **27.08.2003**
(21) Anmeldenummer: 01953990.7
(22) Anmeldetag: 25.06.2001
(51) Int. Cl.: B60J 7/185

(54) **VERRIEGELUNGSEINRICHTUNG FÜR EIN VERSTELLBARES HARDTOP-FAHRZEUGDACH**
LOCKING DEVICE FOR AN ADJUSTABLE HARDTOP VEHICLE ROOF
DISPOSITIF DE VERROUILLAGE POUR UN TOIT RIGIDE OUVRANT REGLABLE DE VEHICULE

(30) Priorität: 23.06.2000 DE 10030760
(43) Veröffentlichungstag der Anmeldung: 19.03.2003
(73) Patentinhaber: CTS Fahrzeug-Dachsysteme GmbH, 21079 Hamburg (DE)
(72) Erfinder: HASSELGRUBER, Andreas, 71735 Eberdingen (DE); NEUBRAND, Frank, West Bloomfield, MI 48322 (US); DUSEK, Richard, Orchard Lake, MI 48324 (US)
(74) Vertreter: Müller, Gottfried
(86) Internationale Anmeldenummer: EP0107197
(87) Internationale Veröffentlichungsnummer: WO01098098

(56) Entgegenhaltungen:
- EP-A- 0 884 208
- DE-U- 9 408 287
- FR-A- 2 525 973
- GB-A- 815 561
- US-A- 5 269 586

## Beschreibung

Die Erfindung bezieht sich auf eine Verriegelungseinrichtung für ein verstellbares Hardtop-Fahrzeugdach nach dem Oberbegriff des Anspruches 1.

Aus der Druckschrift WO 96/27509 ist eine derartige Verriegelungseinrichtung bekannt, mittels der ein mehrteiliges Cabriolet-Fahrzeugdach mit zwei in Fahrzeuglängsrichtung aufeinander folgenden Dachteilen in Schließstellung am Windschutzscheibenrahmen zu verriegeln ist. Die Verriegelungseinrichtung umfasst einen Verschlusshaken, welcher am vorderen Dachteil des verstellbaren Fahrzeugdaches befestigt ist, sowie einen am Windschutzscheibenrahmen befestigten Verschlusszapfen, der in Verriegelungsstellung von dem Verschlusshaken formschlüssig umgriffen wird. Der Verschlusshaken ist -an einem Schwenkhebel drehbar gelagert, welcher ebenfalls schwenkbar am Fahrzeugdach gehalten ist. Am Schwenkhebel greift ein Stellelement an, welches den Schwenkhebel um seine Schwenkachse verdreht, woraufhin der Verbindungspunkt zwischen Schwenkhebel und Verschlusshaken eine Kreisbahn ausführt. Weiterhin ist in den Verschlusshaken eine Führungskulisse eingebracht, in der ein dachfester Kulissenzapfen geführt ist. Über die Form der Kulissenbahn kann eine kombinierte translatorische und rotatorische Verriegelungs- und Freigabebewegung des Verschlusshakens zum Hintergreifen bzw. Lösen des Verschlusszapfens durchgeführt werden. Auf Grund der Führung über die Kulissenbahn übt der Verschlusshaken eine kinematisch bestimmte Bewegung aus.

An den seitlichen, äußeren Rändern des vorderen, dem Windschutzscheibenrahmen benachbarten Dachelements des Cabriolet-Fahrzeugdaches sind Verschlusshaken angeordnet, wobei jedem Verschlusshaken ein quer verlaufender Stellhebel zugeordnet ist, über den die Verschlusshaken zwischen Verriegelungs- und Entriegelungsstellung zu verstellen ist. Die beiden Stellhebel überbrücken den Abstand vom jeweils seitlich außen gelegenen Verschlusshaken zur Mitte des Fahrzeugdaches, wo zur gemeinsamen Betätigung der Stellhebel ein Hydraulikzylinder angeordnet ist.

Die beiden Verschlusshaken liegen weit auseinander in gegenüberliegenden, seitlich äußeren Bereichen des oberen Dachteils. Die Distanz zur Mitte des Fahrzeugdaches muss über entsprechend lang ausgebildete Stellhebel überbrückt werden.

Die Druckschrift DE 1 730 476 U betrifft eine Verschlusseinrichtung für Schiebedächer, die zwei seitlich beabstandete Verschlusshaken auf einer gemeinsamen, quer verlaufenden Trägerschiene umfasst, wobei die beiden Verschlusshaken von einem gemeinsamen Stellglied beaufschlagt werden, bei dessen Betätigung simultan beide Verschlusshaken zwischen ihrer Arretierstellung und ihrer Freigabestellung verstellt werden. Die beiden Verschlusshaken liegen jedoch in Querrichtung gesehen weit auseinander, was ein entsprechend groß ausgeführtes Gestänge erforderlich macht.

Eine gattungsgemäße Verriegelungseinrichtung ist auch aus der Druckschrift EP 0 492 006 A bekannt.

Der Erfindung liegt das Problem zu Grunde, eine konstruktiv einfach aufgebaute Verriegelungseinrichtung für ein verstellbares Hardtop-Fahrzeugdach mit mindestens zwei in Fahrzeuglängsrichtung aufeinander folgenden Dachteilen zu schaffen, welche sich durch eine kompakte Bauform und eine lange Betriebsdauer und hohe Zuverlässigkeit auszeichnet.

Dieses Problem wird erfindungsgemäß mit den kennzeichnenden Merkmalen des Anspruches 1 gelöst. Vorteilhafte Weiterbildungen des Erfindungsgegenstandes sind den Unteransprüchen zu entnehmen.

Die Verriegelungseinrichtung umfasst zwei Verschlusshaken, die vorteilhaft am Fahrzeugdach gehalten sind. Jedem Verschlusshaken ist ein Verschlusszapfen - zweckmäßig am Windschutzscheibenrahmen - zugeordnet, wobei die Verschlusshaken und ihre Verschlusszapfen in Verriegelungsstellung spiegelsymmetrisch zu einer vertikal verlaufenden Längsmittelebene des Fahrzeuges angeordnet sind. Die Verschlusshaken sind bevorzugt an einem gemeinsamen Tragteil befestigt und werden insbesondere über ein gemeinsames Stellglied zwischen Verriegelungsstellung und Entriegelungsstellung verstellt.

Diese Ausführung zeichnet sich durch eine symmetrische Kraftverteilung über die Breite des Fahrzeugdaches aus. Zugleich wird ein geringes Baumaß erreicht, weil die beiden Verschlusshaken unmittelbar nebeneinander im Bereich der Fahrzeugmitte angeordnet werden. Die beiden Verschlusshaken sind Teil einer gemeinsamen Verriegelungskinematik, welche ein gemeinsames, die beiden Verschlusshaken aufnehmendes Tragteil und in besonders zweckmäßiger Weiterbildung auch ein gemeinsames Stellglied umfasst, welches beide Verschlusshaken gleichzeitig beaufschlagt. Die Integration in ein gemeinsames Tragteil erweckt den optischen Eindruck eines einzigen, kompakten Verschlussteils. Dennoch wird auf Grund der zweifachen Befestigung eine symmetrische, gleichmäßig verteilte Krafteinleitung in das Fahrzeugdach erzielt. Weit auseinander liegende Verschlusshaken, die lange, in Querrichtung verlaufende Stellhebel erfordern, werden nicht benötigt, wodurch der Aufwand für die Übertragungskinematik zwischen Antrieb und Verschlusshaken wesentlich verringert wird.

Ein weiterer Vorteil ist darin zu sehen, dass auf Grund der mittigen Anordnung zusätzliche Aufgaben von der Verriegelungseinrichtung übernommen werden können. So ist es möglich, das vordere Dachteil mit dem unmittelbar folgenden, hinteren Dachteil zu verriegeln. Die Verriegelung zwischen aufeinander folgenden Dachteilen wird kinematisch mit der Verriegelung des vorderen Dachteils am fahrzeugfesten Bauteil, insbesondere dem Windschutzscheibenrahmen, gekoppelt und über einen einzigen, gemeinsamen Antrieb ausgeführt.

In einer zweckmäßigen Weiterbildung ist die Hakeninnenseite als Kulissenbahn ausgebildet, in der eine Rastausnehmung zur Aufnahme des Verschlusszapfens in Verriegelungsstellung vorgesehen ist. Diese Kulissen- bzw. Führungsbahn bewirkt, dass der Verschlusshaken bei der Überführung von Entriegelungsstellung in Verriegelungsstellung den Verschlusszapfen lediglich mit seinem äußeren Abschnitt der Hakeninnenseite erfassen muss, woraufhin bei weiterer Verstellung in Richtung Verriegelungsposition der Verschlusszapfen entlang der Kulissenbahn geführt wird und schließlich in der Endposition - der Verriegelungsstellung - in die Rastausnehmung in der Kulissenbahn einrastet. Es kann hierdurch ein Fangradius realisiert werden, der durch den Abstand zwischen Drehachse des Verschlusshakens und vorderer Hakenspitze gekennzeichnet ist; innerhalb dieses Fangradius wird bei der Überführung in Verriegelungsstellung der Verschlusszapfen vom Verschlusshaken ergriffen, woraufhin der Verschlusshaken sich selbst gemeinsam mit dem Fahrzeugverdeck selbsttätig in seine endgültige Verriegelungsposition zieht, welche der Schließstellung des Fahrzeugverdecks entspricht.

Ein Ausführungsbeispiel der Erfindung wird nachstehend an Hand der Zeichnungen näher beschrieben. Es zeigen:
- Fig. 1: eine perspektivische Ansicht eines verstellbaren Hardtop-Fahrzeugverdecks mit einer Mehrzahl von hintereinander angeordneten Dachteilen,
- Fig. 2: eine perspektivische Ansicht einer Verriegelungseinrichtung zur Verriegelung eines Fahrzeugverdecks am Windschutzscheibenrahmen,
- Fig. 3: eine Seitenansicht auf einen Verschlusshaken einer Verriegelungseinrichtung, dargestellt in Verriegelungsstellung und in einer Zwischenstellung zwischen Verriegelungs- und Entriegelungsstellung,
- Fig. 4: eine weitere Verriegelungseinrichtung in einer modifizierten Ausführung.

In den folgenden Figuren sind gleiche Bauteile mit gleichen Bezugszeichen versehen.

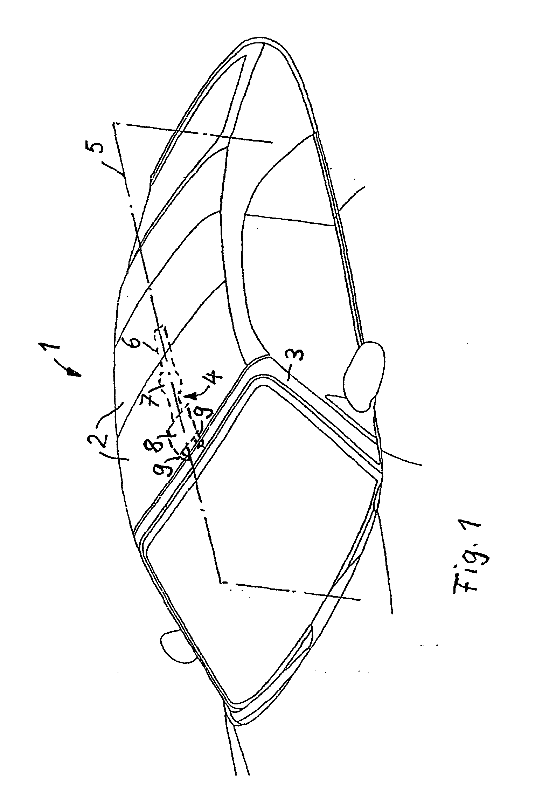

Das in Fig. 1 dargestellte Fahrzeugverdeck 1 ist zwischen der gezeigten Schließstellung und einer den Fahrzeuginnenraum freigebenden Offenstellung verstellbar und besteht aus einer Mehrzahl von Dachteilen 2, die in Schließstellung in Fahrzeuglängsrichtung hintereinander angeordnet sind. Das Fahrzeugverdeck 1 ist zweckmäßig als Hardtop mit in sich starr ausgebildeten Dachteilen 2 ausgeführt; es kann aber auch angezeigt sein, ein Softtop mit einem von einem Verdeckgestänge getragenen Bezugstoff vorzusehen.

Um das Fahrzeugverdeck 1 in der gezeigten Schließstellung am Windschutzscheibenrahmen 3 zu fixieren, ist eine mit gestrichelter Linie eingezeichnete Verriegelungseinrichtung 4 am Fahrzeugverdeck angeordnet. Die Verriegelungseinrichtung 4 ist symmetrisch zu einer Längsmittelebene 5 des Fahrzeuges auf der Innenseite des Fahrzeugverdecks 1 ausgerichtet und besteht aus einem Tragarm 6, einem elektromechanischen Antrieb 7, einer Tragplatte 8 sowie genau zwei spiegelsymmetrisch links und rechts der Längsmittelebene 5 an der Tragplatte 8 befestigten Verschlusshaken 9, welche in der Verriegelungsstellung nicht dargestellte Verschlusszapfen formschlüssig hintergreifen, die am Windschutzscheibenrahmen 3 festgelegt sind und ebenfalls Bestandteil der Verriegelungseinrichtung 4 sind. Tragarm 6, Antrieb 7 und Tragplatte 8 liegen in der Längsmittelebene 5.

Es kann gegebenenfalls zweckmäßig sein, die Verriegelungseinrichtung 4 zusätzlich zur Verriegelung des Fahrzeugverdecks 1 am Windschutzscheibenrahmen 3 auch für weitere Verriegelungsaufgaben heranzuziehen, insbesondere für eine gegenseitige Verriegelung der in Fahrzeuglängsrichtung aufeinander folgenden Dachteile 2. Derartige zusätzliche Verriegelungsmechanismen werden vorteilhaft von nur einem einzigen, gemeinsamen Antrieb 7 betätigt.

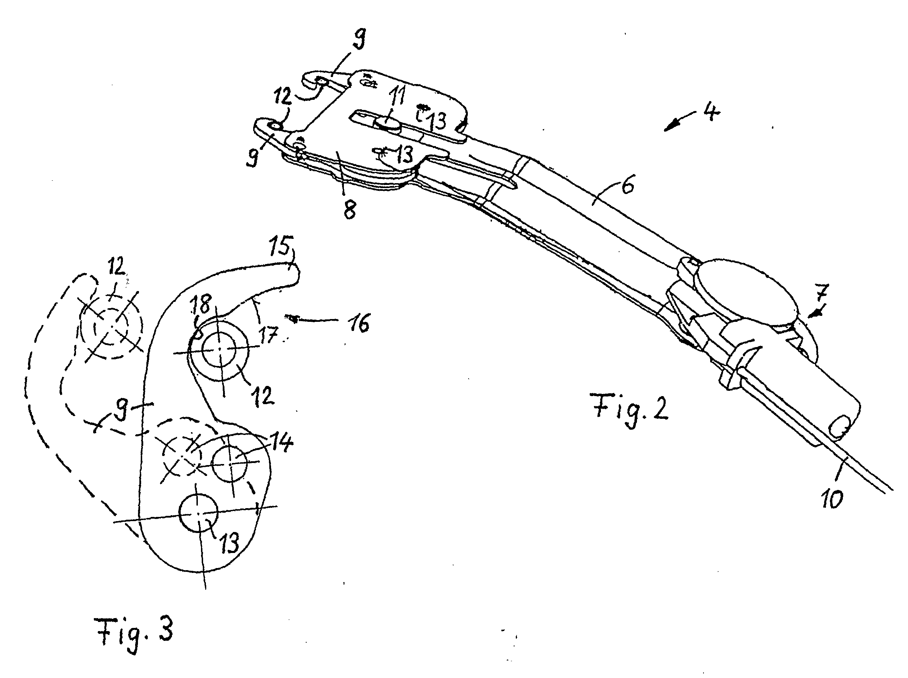

In Fig. 2 ist die Verriegelungseinrichtung 4 in einem vergrößerten Maßstab dargestellt. Der vorteilhaft elektromechanisch ausgebildete Antrieb 7 wird über ein Übertragungskabel 10 betätigt. Die die beiden Verschlusshaken 9 aufnehmende Tragplatte 8 ist über den Tragarm 6 mit dem Antrieb 7 verbunden und nimmt zusätzlich zumindest ein in Fig. 2 nur andeutungsweise dargestelltes Stellglied 11 auf, welches über den Antrieb 7 zu betätigen ist und beide Verschlusshaken 9 gleichzeitig zwischen Ver- und Entriegelungsstellung verstellt. Die Verschlusshaken 9 sind insbesondere rotatorisch schwenkbar an der Tragplatte 8 gelagert.

In Fig. 2 ist die Verriegelungseinrichtung 4 in einer Position zwischen Entriegelungs- und Verriegelungsstellung dargestellt. Die Verschlusshaken 9 ragen über die Tragplatte 9 hinaus und hintergreifen die am Windschutzscheibenrahmen befestigten Verschlusszapfen 12, so dass zwischen Verschlusshaken 9 und Verschlusszapfen 12 ein Formschluss hergestellt ist und das Fahrzeugverdeck fest am Windschutzscheibenrahmen gehalten ist.

Nachdem die Verschlusszapfen 12 von den Verschlusshaken 9 ergriffen bzw. hintergriffen worden sind, werden die Verschlusshaken 9 vorteilhaft rotatorisch um ihre an der Tragplatte 8 gelagerte Drehachse zum Erreichen der Verriegelungsstellung in Richtung Tragplatte 8 zurück verschwenkt, was zur Folge hat, dass das Fahrzeugdach in seine am Windschutzscheibenrahmen anliegende Schließstellung gezogen wird.

Fig. 3 zeigt den Verschlusshaken 9 in einer mit durchgezogener Linie dargestellten Verriegelungsstellung sowie einer mit gestrichelter Linie dargestellten Zwischenstellung zwischen Verriegelungs- und Entriegelungsstellung. Der Verschlusshaken 9 ist um eine Drehachse 13 verschwenkbar gelagert; über die Drehachse 13 ist der Verschlusshaken 9 drehbar an der Tragplatte 8 gehalten. Mit Abstand zur Drehachse 13 ist im Verschlusshaken 9 eine Stellwelle 14 drehbar aufgenommen, wobei die Stellwelle 14 vom Stellglied der Verriegelungseinrichtung beaufschlagt wird und zweckmäßig ein zum Stellglied gehörendes Bauteil bildet, beispielsweise als Zapfen des Stellgliedes ausgeführt ist, welcher in eine Ausnehmung im Verschlusshaken 9 eingreift und in der Ausnehmung rotieren kann. Der Verschlusshaken 9 kann über die Stellwelle 14 eine Drehbewegung um seine Drehachse 13 ausführen. Die Stellwelle 14 liegt in einem Abschnitt des Verschlusshakens 9 zwischen der Drehachse 13 und der Hakenspitze 15.

Der Verschlusshaken 9 weist auf seiner Hakeninnenseite 16 eine Kulissenbahn 17 auf, die mit einer Rastausnehmung 18 versehen ist. Die Rastausnehmung 18 ist zur Aufnahme des Verschlusszapfens 12 in Verriegelungsposition vorgesehen. Die Rastausnehmung 18 ist als konkave, starke Krümmung ausgeführt, auch der der Rastausnehmung 18 vorgelagerte, der Hakenspitze 15 benachbarte Abschnitt der Kulissenbahn 17 weist eine konkave Krümmung auf, die jedoch geringer ist als diejenige der Rastausnehmung 18.

Wird das Fahrzeugverdeck aus seiner Offenstellung in seine Schließstellung überführt, so wird bei Annäherung an den Windschutzscheibenrahmen der Verschlusshaken 9 der Verriegelungseinrichtung 4 aus seiner Entriegelungsstellung mittels des Stellglieds 11 zunächst in die in Fig. 3 gestrichelt dargestellte Zwischenposition verstellt, in der der Verschlusszapfen 12 am Windschutzscheibenrahmen vom vorderen, leicht konkav geformten Abschnitt der Kulissenbahn 17 gefangen wird. Bei weiterer Verstellung des Verschlusshakens 9 in Richtung seiner Verriegelungsposition nimmt der Verschlusshaken die in Fig. 3 mit durchgezogener Linie dargestellte Verriegelungsposition ein. In dieser Position rutscht der Verschlusszapfen 12 in die Rastausnehmung 18 in der Kulissenbahn 17.

Bei der Überführung von Verriegelungsstellung in Entriegelungsstellung läuft der Vorgang in entgegengesetzter Richtung ab.

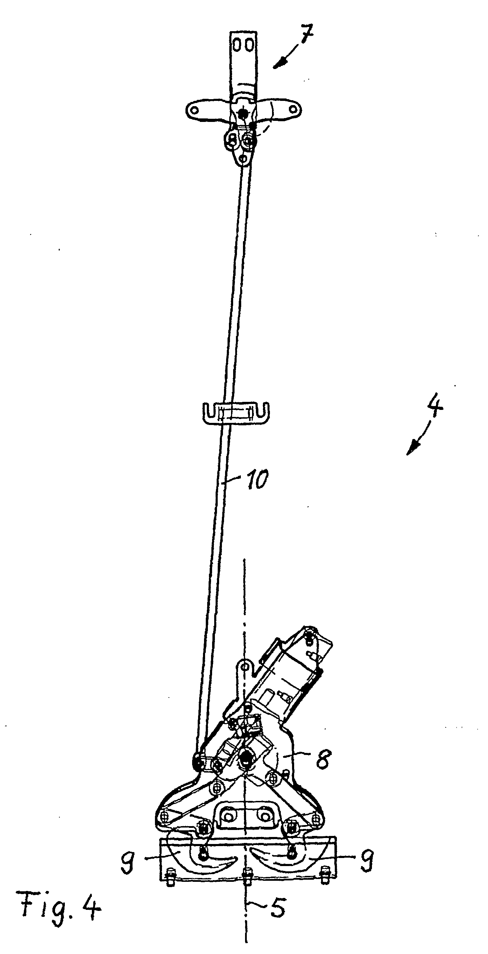

In Fig. 4 ist die Verriegelungseinrichtung 4 in einer modifizierten Ausführung in Verriegelungsstellung dargestellt, in der die Verschlusszapfen 12 von den Verschlusshaken 9 gefangen sind, welche soweit wie möglich in Richtung der Tragplatte 8 zurück verschwenkt sind. Das vom Antrieb 7 betätigbare Übertragungskabel 10 zur Verstellung der Verschlusshaken 9 zwischen Ver- und Entriegelungsposition greift seitlich außerhalb der mit der Längsmittelebene 5 des Fahrzeugs zusammenfallende Spiegelebene der Verschlusshaken 9 an der Stellkinematik an, die an der Tragplatte 8 angeordnet ist und die beide Verschlusshaken gleichzeitig beaufschlagt.

## Patentansprüche

1. Verriegelungseinrichtung für ein zwischen einer Schließstellung und einer Offenstellung verstellbares Hardtop-Fahrzeugdach, das mindestens zwei in Fahrzeuglängsrichtung aufeinander folgende Dachteilen (2) aufweist, mit zwei zwischen einer Verriegelungsstellung und einer Entriegelungsstellung verstellbaren Verschlusshaken (9), die in Verriegelungsstellung jeweils einen zugeordneten Verschlusszapfen (12) zur Arretierung des vorderen Dachteiles (2) am Windschutzscheibenrahmen hintergreifen, und mit einer Stellanordnung zur Verstellung der Verschlusshaken (9) zwischen Verriegelungsstellung und Entriegelungsstellung, wobei die Stellanordnung als ein gemeinsames Stellglied (11) für die gemeinsame Verstellung der beiden Verschlusshaken (9) ausgebildet ist,
**dadurch gekennzeichnet,**
**dass** die beiden Verschlusshaken (9) spiegelsymmetrisch zu einer Längsmittelebene (5) des Fahrzeugs an einer gemeinsamen Tragplatte (8) befestigt ist, und dass aufeinanderfolgende Dachteile (2) über die Verriegelungseinrichtung in einer mit der Verriegelung am Windschutzscheibenrahmen kinematisch gekoppelten Bewegung und über einen gemeinsamen Antrieb verriegelbar sind.

2. Verriegelungseinrichtung nach Anspruch 1,
**dadurch gekennzeichnet,**
**dass** jeder Verschlusshaken (9) um eine Drehachse (13) verschwenkbar ist und in jedem Verschlusshaken (9) eine Stellwelle (14) vorgesehen ist, die mit Abstand zur Verschlusshaken-Drehachse (13) verläuft, und dass das Stellglied (11) bzw. ein vom Stellglied (11) beaufschlagtes Bauteil an der Stellwelle (11) angreift.

3. Verriegelungseinrichtung nach Anspruch 1 oder 2,
**dadurch gekennzeichnet,**
**dass** die Hakeninnenseite (16) jedes Verschlusshakens (9) als Kulissenbahn (17) mit einer Rastausnehmung (18) zur Aufnahme des Verschlusszapfens (12) in Verriegelungsstellung ausgebildet ist.

4. Verriegelungseinrichtung nach einem der Ansprüche 1 bis 3,
**dadurch gekennzeichnet,**
**dass** die Hakeninnenseiten (16) der Verschlusshaken (9) einander zugewandt sind.

## Claims

1. Locking device for a hard top vehicle roof which can be adjusted between a closed position and an open position and which has at least two roof parts (2) following each other in the longitudinal direction of the vehicle, having two closure hooks (9) which can be adjusted between a locking position and an unlocking position and, in the locking position, grip behind a respectively assigned closure pin (12) in order to retain the front roof part (2) on the windscreen frame, and having an adjusting arrangement for adjusting the closure hooks (9) between the locking position and unlocking position, the adjusting arrangement being designed as a common actuator (11) for the common adjustment of the two closure hooks (9), **characterized in that** the two closure hooks (9) are fastened mirror-symmetrically with respect to a longitudinal central plane (5) of the vehicle to a common supporting plate (8), and **in that** successive roof parts (2) can be locked via the locking device in a movement which is coupled kinematically to the locking arrangement on the windscreen frame, and via a common drive.

2. Locking device according to Claim 1, **characterized in that** each closure hook (9) can be pivoted about an axis of rotation (13), and an adjusting shaft (14) is provided in each closure hook (9), the said adjusting shaft running at a distance from the axis of rotation (13) of the closure hook, and **in that** the actuator (11) or a component acted upon by the actuator (11) engages on the adjusting shaft (11).

3. Locking device according to Claim 1 or 2, **characterized in that** the inside (16) of each closure hook (9) is designed as a slotted-guide track (17) with a latching recess (18) for holding the closure pin (12) in the locking position.

4. Locking device according to one of Claims 1 to 3, **characterized in that** the insides (16) of the closure hooks (9) face each other.

## Revendications

1. Dispositif de verrouillage pour un toit ouvrant rigide de véhicule, qui peut être déplacé entre une position de fermeture et une position d'ouverture, qui présente au moins deux parties de toit (2) qui se suivent l'une l'autre dans le sens de la longueur du véhicule, deux crochets de fermeture (9) qui peuvent être déplacés entre une position de verrouillage et une position de déverrouillage et qui dans la position de verrouillage engagent par l'arrière chacun un tourillon de fermeture (12) qui leur est associé pour bloquer la partie avant du toit (2) contre l'encadrement de la vitre du pare-brise et un agencement d'actionnement pour déplacer les crochets de fermeture (9) entre la position de verrouillage et la position de déverrouillage, l'agencement d'actionnement étant configuré comme organe d'actionnement commun (11) pour le déplacement commun des deux crochets de fermeture (9), **caractérisé en ce que** les deux crochets de fermeture (9) sont fixés en positions symétriques par rapport à un plan longitudinal central (5) du véhicule sur une plaque de support (8) commune et **en ce que** les parties de toit (2) qui se suivent peuvent être verrouillées par le dispositif de verrouillage dans un déplacement couplé cinématiquement au verrouillage sur l'encadrement de la vitre du pare-brise et par un entraînement commun.

2. Dispositif de verrouillage selon la revendication 1, **caractérisé en ce que** chaque crochet de fermeture (9) peut pivoter autour d'un axe de rotation (13) et **en ce qu'**un arbre d'actionnement (14) qui s'étend à distance de l'axe de rotation (13) du crochet de fermeture est prévu dans chaque crochet de fermeture (9), et **en ce que** l'organe d'actionnement (11) ou un composant sollicité par l'organe d'actionnement (11) s'engage sur l'arbre d'actionnement (11).

3. Dispositif de verrouillage selon la revendication 1 ou 2, **caractérisé en ce que** le côté intérieur (16) de chaque crochet de fermeture (9) est configuré comme piste de coulissement (17) dotée d'une découpe d'encliquetage (18) destinée à recevoir le tourillon de fermeture (12) dans la position de verrouillage.

4. Dispositif de verrouillage selon l'une des revendications 1 à 3, **caractérisé en ce que** les côtés intérieurs (16) des crochets de fermeture (9) sont tournés l'un vers l'autre.
